(19) Europäisches Patentamt
European Patent Office
Office européen des brevets

(11) **EP 3 006 199 A1**

(12) **EUROPEAN PATENT APPLICATION**
published in accordance with Art. 153(4) EPC

(43) Date of publication:
**13.04.2016 Bulletin 2016/15**

(21) Application number: **14807296.0**

(22) Date of filing: **03.06.2014**

(51) Int Cl.:
*B32B 7/02* (2006.01)   *F21S 2/00* (2016.01)
*F21V 7/00* (2006.01)   *F21V 7/04* (2006.01)

(86) International application number:
**PCT/JP2014/064752**

(87) International publication number:
**WO 2014/196534 (11.12.2014 Gazette 2014/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.06.2013 JP 2013120372**

(71) Applicant: **Toray Industries, Inc.**
**Tokyo, 103-8666 (JP)**

(72) Inventors:
• **KAWATA Yuji**
**Otsu-shi, Shiga 520-8558 (JP)**
• **WAKAHARA Ryuichi**
**Otsu-shi, Shiga 520-8558 (JP)**
• **TANAKA Shotaro**
**Otsu-shi, Shiga 520-8558 (JP)**

(74) Representative: **Kador & Partner**
**Corneliusstraße 15**
**80469 München (DE)**

(54) **LIGHT-REFLECTIVE FILM AND EDGE LIGHT-TYPE BACKLIGHT**

(57) A light-reflective film that satisfies (i) to (iv) below and that is suitable particularly for a reflective sheet used in an edge light type backlight.
(i) The light-reflective film is a film in which at least two layers are stacked.
(ii) The difference in surface roughness SRa between one surface and the other surface is greater than or equal to 0.5 µm.
(iii) A value obtained by dividing the surface roughness (SRa) of the one surface by the surface roughness (SRa) of the other surface is greater than or equal to 6.0.
(iv) The thickness T (µm) of the entire film and the degree of bending stiffness S (mN·m) satisfy the expression of

$$1 \leq S/T \times 1000 \leq 25.$$

EP 3 006 199 A1

## Description

### Technical Field

The invention relates to a light-reflective film that is capable of restraining the decline in the uniformity degree of luminance in a screen and is excellent in reflection characteristic because the surface roughness of two surfaces of the film and the degree of bending stiffness of the film are in specific ranges. Furthermore, the light-reflective film of the invention can be suitably used as reflective sheets of lamp reflectors and backlight apparatuses for displaying images, reflective sheets of lighting appliances, reflective sheets for illuminated signs, etc. and, particularly, can be suitably used as a reflective sheet of an edge light type backlight apparatus for displaying images.

### Background Art

In back light sources (backlights) for use in liquid crystal displays, illuminated signs, etc., it is often the case that light-reflective films are installed in order to efficiently use light energy from the back light sources. The back light sources are classified into a direct type and an edge light type depending on the locations where the light sources are positioned. The direct type is a type of which a light source is disposed behind a screen in a display. As for the edge light type, a light source is installed at an edge of a screen and is used together with a light guide plate that converts light into light in directions toward the screen.

In recent years, as light sources for back light sources, light emitting diodes (hereinafter, denoted as LEDs) whose electric power consumption is small and which allows increased output have been adopted. This allows, even in large-size liquid crystal displays, adoption of a system that has a light source disposed at a side surface of a backlight apparatus and is therefore advantageous for a thinner construction instead of an earlier adopted system in which a light source is disposed at the back of a backlight apparatus. Casings of such large-size LED backlights are sometimes provided with concave-convex structure having heights of about 5 to 10 mm for improved strength of the casings or for electric writing and the housing of baseboards or with grooved formations for heat dissipation which are made in an end portion of the casing close to an LED light source. Since the edge light type backlight has a structure in which a light guide plate and a reflective plate contact, it sometimes happens in a backlight having a non-uniform casing mechanism as described above that the light guide plate and the reflective plate are pressed against each other or rubbed on each other so that one of the two plates damages the other or close contact between the two plates occurs, resulting in formation of portions that are locally high in luminance (hereinafter, denoted as bright spot irregularity).

With regard to such a problem, Patent documents 1 and 2 disclose reflective sheets in which a layer containing soft beads is stacked on a substrate sheet layer. However, due to concave-convex structure of the mechanism/casing or to heat produced from the light source, or depending on the type of light guide plate used, the effect of restraining the bright spot irregularity sometimes becomes insufficient.

Furthermore, in a large-size liquid crystal display or the like in particular, it sometimes happens that the light-reflective sheet itself, because of its large size, has flexure occurring in a groove in the casing as mentioned above or the like, resulting in occurrence of a problem in which along the flexure of the light-reflective sheet, the luminance as backlight's luminance changes (the flexure is visually recognized, which is hereinafter denoted as flexure irregularity). Although about this problem, a method for avoiding flexure of a light-reflective sheet by sticking the light-reflective sheet to a casing is disclosed in Patent document 3, this has a problem of production cost increase or the like due to an increased number of process steps.

### Prior Art Documents

### Patent Documents

Patent document 1: Japanese Unexamined Patent Publication (Kokai) No. 2003-92018
Patent document 2: Published Japanese Translation of PCT International Application JP 2008-512719
Patent document 3: Japanese Unexamined Patent Publication (Kokai) No. 2010-230804

### Summary of the Invention

### Problems to be Solved by the Invention

In the edge light type backlights for liquid crystal displays, there are cases where due to recent changes in design such as the increased screen size and the like, the related-art light-reflective sheets cause the damaging due to contact with the light guide plate or the bright spot irregularity due to close contact with the light guide plate.

Furthermore, in liquid crystal displays with large screens in particular, there is a problem, in addition to the foregoing problem, in which the light-reflective sheet flexes at a groove provided on the casing or the like so that flexure irregularity is visually recognized.

An object of the invention is to provide a light-reflective film that minimizes the problem of bright spot irregularity and flexure irregularity mentioned above and improves the uniformity degree of a screen of a liquid crystal display. In particular, it is an object of the invention to provide a light-reflective film that is suitably usable in an edge light type backlight apparatus in which an LED light source is disposed at a side surface.

## Means for Solving the Problems

The light-reflective film of the invention that solves the foregoing problem satisfies all of (i) to (iv) below.
(i) The light-reflective film is a film in which at least two layers are stacked;
(ii) a difference in surface roughness SRa between one surface and another surface is greater than or equal to $0.5\,\mu m$;
(iii) a value obtained by dividing the surface roughness (SRa) of the one surface by the surface roughness (SRa) of the another surface is greater than or equal to 6.0;
(iv) a thickness T $(\mu m)$ of the entire film and a degree of bending stiffness S $(mN\cdot m)$ satisfy an expression of $1 \leq S/T \times 1000 \leq 25$.

## Advantageous Effects of the Invention

According to the invention, a light-reflective film that, while maintaining a reflection characteristic, is excellent in the uniformity degree of a screen and restrains the occurrence of luminance irregularity, including bright spot irregularity and flexure irregularity, when used in a backlight can be obtained. Therefore, the light-reflective film of the invention can be suitably used in an edge light type backlight apparatus. Furthermore, because of being high in stiffness and excellent in luminance, the light-reflective film of the invention can minimize the folding or scratched flaw that can occur during the processing and assembling operations and therefore can be suitably used as reflective sheets of liquid crystal displays in general, besides the LED backlight apparatuses for thin and large screens.

## Brief Description of the Drawing

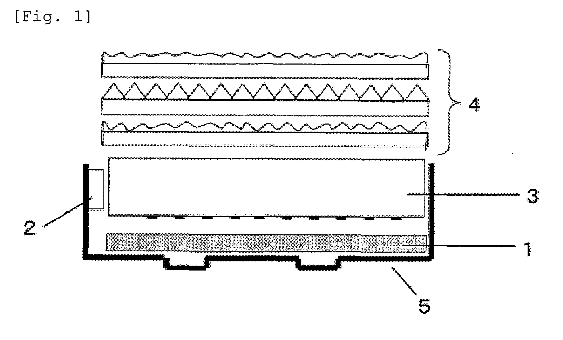

[Fig. 1] Fig. 1 is an example of a general sectional view of an edge light type backlight apparatus in which the light-reflective film of the invention is incorporated.

## Description of Preferred Embodiments

The present inventors earnestly studied on a solution to the aforementioned problem, that is, a light-reflective film that is high in the uniformity degree of a screen and that restrains the occurrence of luminance irregularity, including bright spot irregularity and flexure irregularity, when incorporated into an edge light type backlight apparatus in which an LED light source is disposed in a screen edge portion, and have found out and clarified that a light-reflective film having a specific construction is capable of solving the foregoing problem.

The light-reflective film of the invention is a film in which at least two layers are stacked. The method for this stacking is not particularly limited but a method based on co-extrusion, a method in which dry or wet coating is performed on a substrate film, etc., can be arbitrarily selected. Furthermore, the resins to be stacked in layer may be the same resin for the layers, or different resins may be stacked in layer.

As resins used in the invention, for example, polyester resin, such as polyethylene terephthalate and polyethylene naphthalate, polyolefin resin, such as polyethylene-polypropylene, polycycloolefin, etc., or polyacrylic resin and polycarbonate resin can be cited. Among these, polyester resin is suitably used in terms of price, availability, etc. Furthermore, as for the resin that forms each layer, two or more species may be copolymerized or different resins may be blended.

Furthermore, in the resin of each layer, as far as the advantageous effects of the invention are not inhibited, various additives, for example, a fluorescence brightening agent, a crosslinking agent, a heat resistant stabilizing agent, a oxidation-resistant stabilizing agent, an ultraviolet absorbing agent, an organic lubricant, an inorganic fine particle, a filler, a light resistant agent, an antistatic agent, a nucleating agent, a dye, a dispersing agent, a coupling agent, etc., may be added.

The ratio between the thicknesses stacked is not particularly stipulated; however, the layer that develops reflection capability is preferred to account for 70% or more of the entire thickness, more preferably 80% or more, and even more preferably 85% or more. Incidentally, in the case where the light-reflective film of the invention contains a plurality of layers, the entire thickness refers to the total thickness of the plurality of layers.

Furthermore, in the light-reflective film of the invention, with regard to the surface roughnesses SRa of two surfaces measured by a method described later, it is preferable that:

the difference between the surface roughnesses SRa of one surface and the other surface (hereinafter, sometimes referred to simply as difference in surface roughness) be greater than or equal to 0.5 μm; and

the value obtained by diving the surface roughness (SRa) of the one surface by the surface roughness (SRa) of the other surface (hereinafter, sometimes referred to simply as ratio in surface roughness) be greater than or equal to 6.0.

In the light-reflective film of the invention, it is considered that because the difference in surface roughness is in the aforementioned range, an adequate sliding characteristic of the film with the light guide plate can be obtained and an adequate close contact characteristic with the casing can be obtained without a need for fixation with tape or the like when the film is incorporated in a backlight, and therefore occurrence of bright spot irregularity is unlikely. On the other hand, if the difference between surface roughnesses is not in the range, it can sometimes happen that when the light guide plate and the light-reflective film are pressed against each other or rubbed on each other, the light guide plate damages the light-reflective film or, conversely, the light-reflective film damages the light guide plate.

The difference in surface roughness is preferred to be greater than or equal to 0.5 μm, more preferably greater than or equal to 1.0 μm, and even more preferably greater than or equal to 1. 5 μm. The difference in surface roughness does not have a particular upper limit; however, it is usually less than or equal to 100 μm, taking into consideration the concave-convex structure provided on the film. Furthermore, the ratio in surface roughness is preferred to be greater than or equal to 6.0, more preferably greater than or equal to 10.0, and even more preferably greater than or equal to 15.0.

Incidentally, the "difference in the surface roughnesses SRa between one surface and the other surface" is obtained by subtracting the value of surface roughness SRa of a surface which is the smaller value from the value thereof of the surface which is the larger value, and the "value obtained by dividing the surface roughness (SRa) of one surface by the surface roughness (SRa) of the other surface (ratio in surface roughness)" is a value obtained by dividing the value of surface roughness of a surface that is the larger value by the value thereof of the surface that is the smaller value. A method for adjusting the surface roughnesses of the light-reflective film of the invention into such ranges will be described later.

Furthermore, as for the light-reflective film of the invention, it is preferable that the thickness T (μm) of the entire film and the degree of bending stiffness S (mN·m) satisfy the expression of

$$1 \leq S/T \times 1000 \leq 25.$$

The measurement methods for the thickness T (μm) of the entire film and the degree of bending stiffness S (mN·m) are as described below.

If S/T × 1000 is less than 1, it sometimes happens that folding occurs at the time of sheet cutting process or the time of assembly or there occurs luminance irregularity (flexure irregularity) because of flexure of the reflective sheet due to the concave-convex structure of the casing. On the other hand, if S/T × 1000 exceeds 25, that is sometimes not preferable in terms of the transportation characteristic and the wind-up characteristic of the film. The value of S/T × 1000 is preferably greater than or equal to 5 and less than or equal to 25, more preferably greater than or equal to 5 and less than or equal to 20, even more preferably greater than or equal to 7 and less than or equal to 18, and particularly preferably greater than or equal to 7 and less than or equal to 15.

The method for developing the light reflectivity of the light-reflective film of the invention is not particularly limited; for example, a reflective film obtained by vapor depositing a metal layer on a resin film, a white reflective film that develops reflection capability because of having many voids in a resin layer, a white reflective film having reflection capability developed because of containing particles of different refractive indexes in a resin layer, a light-reflective film in which reflection capability has been developed by stacking many layers while alternately gradually varying the thicknesses of a plurality of resins of different refractive indexes in a range of thickness of about 100 nm to 1,000 nm, etc., can be cited. Furthermore, the light-reflective film of the invention may be a film obtained by a combination of a plurality of methods mentioned above.

Of these methods, the white reflective film having many voids in a resin layer is preferable in terms of production costs. As for the method for forming many voids in the resin layer, a method that uses a foaming agent and a method that forms voids by extruding a resin that contains a nucleating agent and then performing stretching along one axis or two axes can be cited, and the latter method is preferably used since the number of steps of the method is usually smaller.

Furthermore, as for the light-reflective film of the invention, it is preferable that the relative reflectance (hereinafter, sometimes referred to simply as reflectance) measured by a method described later be greater than or equal to 95% with respect to at least one surface. The reflectance is more preferably greater than or equal to 98% and even more preferably greater than or equal to 100%. If the reflectance of the light-reflective film is less than 95%, the luminance as a backlight sometimes becomes insufficient. When the light-reflective film of the invention is installed in a backlight, it is preferable that the surface whose reflectance is the higher be used as a reflective surface (be directed to a light source side).

With regard to the surface roughnesses of two surfaces of the light-reflective film of the invention, the method for achieving the following:

the difference between the surface roughnesses SRa of one surface and the other surface is greater than or equal to 0.5 $\mu$m; and

the value obtained by diving the surface roughness (SRa) of the one surface by the surface roughness (SRa) of the other surface is greater than or equal to 6.0,

is not particularly specified. However, there can be cited, for example, a method in which co-extrusion is performed so that different resin layers appear in two surface layers, a method in which the surface roughness is controlled by adding additives, such as different particles, into the resin layers in two surface layers (which includes adding an additive only into one surface layer), a method in which on one surface of the resin film, another layer is provided by wet or dry coating, a method in which thermoforming involving pressed contact with a die or the hardening of a resin is performed, etc.

Among these, a method in which particles are added by a wet coating method is easy and convenient and therefore is preferable; furthermore, it is preferable that the particle be an organic particle in light of the characteristic of damaging the light guide plate.

As for the organic particle, various materials, such as acrylic, urethane, nylon, silicone, polystyrene, polyester, and polyolefin, can be used. Furthermore, of the foregoing organic particles, the particles obtained by copolymerizing different monomers or a mixture of a plurality of species may be employed. As far as the advantageous effects of the invention are not inhibited, various additives, for example, a fluorescence brightening agent, a crosslinking agent, a heat resistant stabilizing agent, an oxidation-resistant stabilizing agent, an ultraviolet absorbing agent, a filler, a light resistant agent, an antistatic agent, a nucleating agent, a dye, a coupling agent, etc., may be added.

As for the binder resin used to solidify an organic particle when a coating containing the organic particle is to be provided on the light-reflective film of the invention, various resins can be used, that is, various resins, such as acrylic, polyurethane, polyester, polycarbonate, polyolefin, etc., can be used. Of the foregoing resins, a resin obtained by copolymerizing different monomers or a mixture of a plurality of species may be used. As far as the advantageous effects of the invention are not inhibited, various additives, for example, a fluorescence brightening agent, a crosslinking agent, a heat resistant stabilizing agent, an oxidation-resistant stabilizing agent, an ultraviolet absorbing agent, a filler, a light resistant agent, an antistatic agent, a nucleating agent, a dye, a coupling agent, etc., may be added.

As for the light-reflective film of the invention, the configuration of the organic particle is not particularly stipulated; however, considering the characteristic of damaging a light guide plate, the configuration thereof is preferred to be spherical. Herein, being spherical does not necessarily mean only a true sphere but also means configurations in which the sectional shape of a particle is externally defined by a curved surface of a circular shape, an elliptical shape, a substantially circular shape, a substantially elliptical shape, etc. Furthermore, in order to prevent the damaging of a light-reflective film surface or make less visible flaws formed on the light-reflective film surface, it is preferable to use an indefinite-shape inorganic particle and/or an indefinite-shape organic particle; furthermore, an indefinite-shape particle is sometimes economically advantageous as compared with a spherical particle.

Furthermore, as for the light-reflective film of the invention, it is preferable that the volume average particle diameter of the organic particle be greater than or equal to 5 $\mu$m and less than or equal to 50 $\mu$m. The way to find the volume average particle diameter will be described later. If the volume average particle diameter is less than 5 $\mu$m, luminance irregularity due to the sticking to the light guide plate sometimes occurs. Furthermore, if the volume average particle diameter exceeds 50 $\mu$m, it is sometimes not preferable from the viewpoint of coating characteristic. A more preferable range of the volume average particle diameter is greater than or equal to 10 $\mu$m and less than or equal to 40 $\mu$m and, even more preferably, greater than or equal to 20 $\mu$m and less than or equal to 30 $\mu$m. Furthermore, a plurality of species of particles different in volume average particle diameter may be used in the form of a mixture.

In the invention, in order that the thickness T ($\mu$m) of the entire film and the degree of bending stiffness S (mN·m) satisfy the expression of

$$1 \leq S/T \times 1000 \leq 25,$$

it is more preferable to have a construction that satisfies all of (1) to (4) below.

> (1) The construction has a layer that substantially does not contain a cavity (hereinafter, sometimes simplified as A layer) and a layer that contains a cavity (hereinafter, sometimes simplified as B layer).
> (2) The layer that contains a cavity (B layer) contains an inorganic particle and a resin incompatible with the matrix resin.
> (3) The content of the resin incompatible with the matrix resin is greater than or equal to 5 mas% and less than 12 mas% where the entire mass of the layer that contains a cavity (B layer) is 100 mas%.
> (4) The content of the inorganic particle is greater than or equal to 15 mas% and less than 30 mas% where the entire mass of the layer that contains a cavity (B layer) is 100 mas%.

Incidentally, the light-reflective film of the invention may be made up of two layers, that is, the A layer and the B layer mentioned above, or may also have another layer between or at an outer side of the A layer and the B layer.

Furthermore, as for the light-reflective film of the invention, it is preferable that the number of layers other than the coating be greater than or equal to two. If the number of layers is greater than or equal to two, the layers are preferred to be two or more layers that include the layer that substantially does not contain a cavity (A layer) and the layer that contains a cavity (B layer), as stated above. Incidentally, a more preferable construction is a three-layer construction of A layer/B layer/A layer. Incidentally, as for the layers other than the coating, for example, a adhesive layer and another film in the case where the another film is laminated via the sticky layer are each counted as one layer.

Furthermore, if the number of layers other than the coating is increased, the expression of

$$1 \leq S/T \times 1000 \leq 25$$

is more likely to be satisfied. However, an increased number of layers will complicate the production steps or require many materials, so that the production cost can sometimes become high. The upper limit of the number of layers other than the coating is preferred to be less than or equal to five, more preferably less than or equal to four, and even more preferably less than or equal to three.

In the invention, it is more preferable to have a construction that satisfies all of (1) to (4) as stated above. If a construction that satisfies all of (1) to (4) is provided, the effects of the invention can be suitably developed even in the case where the number of layers other than the coating is relatively small.

In the B layer that contains a cavity, it is preferable that a resin incompatible with a matrix resin and an inorganic particle be both contained. In the invention, the matrix resin refers to a resin component that occupies the largest area in portions of a cut surface observed by a cross-sectional SEM observation method described below (see the section (1) of Total Film Thickness T, Presence or Absence of Stack Construction, and Thickness of Each Layer in [Measurement of Physical Property Values and Evaluation Method for Effects]) which exclude cavities and inorganic particles.

In the case where a plurality of resins are copolymerized, the case where a plurality of resins are thoroughly blended, or the case where an additive is uniformly dissolved in a resin, such resins are collectively referred to as matrix resin. For example, in the case where the matrix resin of the B layer is polyester, the resin incompatible with the matrix resin (hereinafter, sometimes simplified as incompatible resin) may be a homopolymer or may also be a copolymer, and a polyolefin resin, such as polyethylene, polypropylene, polybutene, or polymethylpentene, a cyclic polyolefin resin, a polystyrene resin, a polyacrylate resin, a polycarbonate resin, a polyacrylonitrile resin, a polyphenylene sulfide resin, a fluorine resin etc., can be suitably used. As for these resins, two or more species may be used together. Among the foregoing incompatible resins, a resin that is great in the critical surface tension difference with the polyester resin and that does not easily deform in a heating process following the drawing process is particularly preferable. Concretely, crystalline polyolefins of polyethylene, polypropylene, polybutene, polymethylpentene, etc., amorphous cycloolefin-based copolymers and copolymers of these materials can be cited.

Because an incompatible resin is contained, the incompatible resin nucleates formation of cavities during the stretching, and the cavity interface causes light reflection. Therefore, in order to obtain high reflectance, the cavities may be increased. However, increases of cavities sometimes result in decreases of reflective interfaces due to junction of cavities and may lead to reduced strength of the reflective film, so that cavities are more likely to be destroyed when a local force acts on the reflective film. When the reflective film is incorporated in an LED backlight casing for a thin and large screen, it sometimes happens that due to concave-convex structure of the casing and concave-convex structure of the light guide plate, scratched flaws are formed on the reflective film, causing luminance irregularity. An excessive increase of cavities decreases the apparent density of the light-reflective film and results in a decreased degree of stiffness, and therefore is sometimes unpreferable from the viewpoint of ease of handling. Furthermore, such a light-reflective film is subject to occurrence of folding during processing and assembly and flexure of the reflective film due to the concave-convex structure of the casing, and therefore sometimes has luminance irregularity.

On another hand, inorganic particles scatter light and therefore improve reflectance. However, excessive addition of inorganic particles sometimes result in decreased reflection capability due to absorption of light by the inorganic particles, reduces the reflectance improving effect due to aggregation of inorganic particles, or impairs film formation stability. Furthermore, in the case where an inorganic particle is used together with an incompatible resin as in the invention, the uniform production of cavities nucleated by the incompatible polymer is sometimes inhibited.

Therefore, in order to heighten the degree of luminance uniformity of a screen, achieve an excellent degree of bending stiffness, and maintain a high luminance, the apparent specific gravity of the light-reflective film of the invention is preferred to be greater than or equal to 0.6 $g/cm^3$, more preferably greater than or equal to 0.7 $g/cm^3$, and even more preferably greater than or equal to 0.75 $g/cm^3$. If the apparent specific gravity is less than 0.6 $g/cm^3$, the luminance becomes high but the degree of stiffness decreases, so that the luminance irregularity of the reflective film due to the concave-convex structure of the casing sometimes becomes more likely to occur. Although the upper limit of the apparent specific gravity is not particularly restricted, it is preferred to be less than or equal to 2.0 $g/cm^3$ when the production cost is considered.

In the invention, it is preferable that the incompatible resin contained in the B layer be dispersed in the matrix resin with its number average particle diameter being greater than or equal to 0.4 $\mu$m and less than or equal to 3.0 $\mu$m, in order to obtain an appropriate number of reflective interfaces and an appropriate film strength. More preferably, the number average particle diameter is in the range of greater than or equal to 0.5 $\mu$m and less than or equal to 1.5 $\mu$m. The number average particle diameter mentioned herein is an average value of diameters of particles obtained by cutting out a section of the film, finding the areas of 100 particles of the incompatible resin observed under a scanning type electron microscope (FE-SEM) S-2100A made by Hitachi, Ltd., and performing a conversion into perfect circles.

In the invention, as the inorganic particle contained in the B layer, for example, calcium carbonate, titanium dioxide, zinc oxide, zirconium oxide, zinc sulfide, basic lead carbonate (white lead), barium sulfate, etc. are cited. Among these, calcium carbonate, barium sulfate, titanium dioxide, etc., whose absorption in a visible light range of 400 to 700 nm is small, are preferable from the viewpoints of reflection characteristic, concealment characteristic, production cost, etc. In the invention, barium sulfate and titanium dioxide are the most preferable from the viewpoint of improvement of reflection characteristic, long-period film formation stability, and the wind-up characteristic of the film.

As for the particle diameter of the inorganic particle, use of an inorganic particle whose number average particle diameter is greater than or equal to 0.1 $\mu$m and less than or equal to 3.0 $\mu$m is preferred in order to realize excellent reflectiveness and concealment characteristic. The number average particle diameter of the inorganic particle is more preferably greater than or equal to 0.3 $\mu$m and less than or equal to 2.0 $\mu$m, and even more preferably greater than or equal to 0.5 $\mu$m and less than or equal to 1.5 $\mu$m.

In the invention, a preferable content of the incompatible resin contained in the B layer is greater than or equal to 5 mas% and less than 12 mas% and, more preferably, greater than or equal to 7 mas% and less than or equal to 11 mas% where the mass of the entire layer that contains a cavity (B layer) is defined as 100 mas%. Furthermore, a preferable content of the inorganic particle contained in the B layer is greater than or equal to 15 mas% and less than 30 mas% and, more preferably, greater than or equal to 17 mas% and less than or equal to 25 mas% where the mass of the entire B layer is defined as 100 mas%. If the content of the incompatible resin is increased, the number of cavities increases, so that the apparent specific gravity decreases. Furthermore, with an increased content of the inorganic particle, cavities produced due to the incompatible resin sometimes join together. The apparent specific gravity depends also on the stretching condition and therefore is not particularly restricted; however, it is preferable that the contents of the incompatible resin and the inorganic particle contained in the B layer be in the aforementioned ranges, in order to achieve an apparent specific gravity greater than or equal to 0.6 $g/cm^3$ and less than or equal to 2.0 $g/cm^3$.

In the invention, in order to obtain a reflective film that is excellent in the degree of bending stiffness and that inhibits the luminance irregularity caused by flexure of the light-reflective film, it is more preferable that where the thickness of the A layer is TA ($\mu$m) and the thickness of the entire film is T ($\mu$m), TA/T be greater than or equal to 0.05 and less than or equal to 0.15, besides causing the contents of the incompatible resin and the inorganic particle in the B layer to be in the aforementioned ranges. Even more preferably, TA/T is greater than or equal to 0.06 and less than or equal to 0.10. If TA/T is less than 0.05, the degree of bending stiffness sometimes decreases. On the other hand, in the case where TA/T exceeds 0.15, the loss of light energy in the A layer is unignorable and the proportion of the B layer, which is the reflective layer, reduces, so that the reflection capability (luminance) may sometimes decrease.

In the invention, it is preferable that the A layer be a layer that substantially does not contain a cavity. Substantially not containing a cavity refers to a layer state in which the voidage is less than 10%. Therefore, the thickness of the A layer refers to the thickness of a layer that substantially does not contain a cavity in electron microscopic observation of a section of the layer. On the other hand, the thickness of the B layer refers to the thickness of a layer that contains cavities in electron microscopic observation of a section of the layer. Furthermore, in the case where an interface of a layer is clearly observed in electron microscopic observation, such as a case where different materials are stacked in layer, the thickness from the surface to the interface may be measured. Incidentally, the voidage is defined by the proportion of the area occupied by voids in the area of a cut surface observed by a cross-sectional SEM observation method (see the section (1) of Total Film Thickness T, Presence or Absence of Stack Construction, and Thickness of Each Layer in [Measurement of Physical Property Values and Evaluation Method for Effects]). Concretely, the voidage refers to the value obtained by dividing the area of void portions in a cross-section imaged at a predetermined magnification by the area of the cross-section.

In the invention, the thickness of the entire light-reflective film is not particularly stipulated; however, the thickness is preferred to be greater than or equal to 70 μm and less than or equal to 400 μm. More preferably, the thickness of the entire light-reflective film is greater than or equal to 90 μm and less than or equal to 380 μm. If the thickness of the entire light-reflective film is less than 70 μm, it sometimes happens that the reflectance is insufficient or the degree of bending stiffness is insufficient so that flexure easily occurs. Furthermore, the upper limit of the thickness thereof does not need to be particularly restricted; however, if the thickness exceeds 400 μm, it sometimes happens that a further increase of the thickness is not expected to increase the reflectance and the production cost becomes high.

[Measurement of Physical Property Values and Evaluation Method for Effects]

The evaluation method for physical property values and the evaluation method for effects in the invention are as follows.

(1) Total Film Thickness T, Presence or Absence of Stack Construction, Thickness of Each Layer, and Voidage

The thickness T of the entire film was measured according to JIS C2151:2006. The thickness of each layer and the presence or absence of a stack construction were determined and calculated as follows. Light-reflective films were cut without crushing them in the thickness direction by using a microtome to obtain cut section samples. A section surface of each cut section sample was subjected to determination of the presence or absence of a stack construction by using a scanning type electron microscope (FE-SEM) S-2100A made by Hitachi, Ltd. From a picked-up image, each layer's thickness was measured to calculate the layers' thicknesses and thickness ratios. Incidentally, at the time of the measurement, the measurement was performed by appropriately adjusting the magnification at 200 times to 10,000 times so that in the longitudinal direction of each image obtained by picking up images of a film cut surface under the electron microscope, 1/2 or greater of the length thereof in the longitudinal direction was equal to the entire thickness of the film. The voidage was defined as a value obtained by picking up images of a section surface of a cut section sample at a magnification of 2,500 times by using a scanning type electron microscope (FE-SEM) S-2100A made by Hitachi, Ltd. and dividing the area of void portions in the obtained image by the area of the section surface.

(2) Surface Roughness SRa

According to JIS B0602:2001, the surface roughness SRa was measured by using a microfigure measuring instrument SURFCORDER ET4000A made by Kosaka Laboratory Ltd. in the following conditions:

- Measurement terminal: made of diamond, distal end R = 2 μm
- Measurement force: 100 μN
- Measurement length: 1 mm
- Measurement speed: 0.1 mm/sec
- Cut-off value: 0.08 mm

(3) Apparent Density

A film was cut into a 100 mm × 100 mm square. Thicknesses thereof at 10 points were measured by a dial gauge (No. 2109-10 made by SANPO SEISAKUSHO K.K.) equipped with a gauge head of 10 mm in diameter (No. 7002), and an average value d (μm) of the thicknesses was calculated. Furthermore, this film weighed by a digital-reading balance, and the weight w(g) was read in the unit of $1.00 \times 10^{-4}$ g. The value calculated by the following expression was defined as an apparent density.

$$\text{Apparent density} = w/d \times 100 \ (g/cm^3)$$

(4) Degree of Bending stiffness S

The degree of bending stiffness is a degree of bending stiffness obtained at a bending angle of 15° according to JIS P8125:2000, and was determined by using a taper type degree-of-stiffness tester TELEDYNE MODEL150-D (made by NORTH Tonowanda, New York, USA).

(5) Relative Reflectance

An integrating sphere was attached to a spectrophotometer (U-3310) made by Hitachi High-Technologies Corporation, and a reflectance with a standard white plate (aluminum oxide) defined as being 100% was measured as a relative reflectance at a wavelength of 560 nm. This measurement was performed on the two surfaces of the light-reflective film of the invention, and the higher value of reflectance was adopted.

(6) Identification/Quantification of Layer Constituents

Separation into individual constituting layers was carried out by a method such as pealing. After dissolution in various solvents/aqueous solutions, filtration was performed to separately obtain a dissolved matter and a precipitation, followed by performing an analysis, such as NMR, IR, EDX, a fluorescence X-ray method, or an ICP spectrometry method, to carry out identification and quantification. Incidentally, with regard to organic particles, identification and quantification were performed by IR to analyze the composition thereof.

(7) Evaluation of Relative Luminance/Bright Spot Irregularity and Flexure Irregularity

A 40-inch liquid crystal television (made by Samsung Company, PAVV UN40B7000WF) was disassembled to extract an edge light type backlight whose light source was LEDs. The size of the light emitting face of the backlight was 89.0 cm × 50.2 cm, and the diagonal length was 102.2 cm. Furthermore, three optical films, a light guide plate (acrylic plate, 4 mm in thickness, a protrusion portion of 15 μm), and a reflective film were extracted from the backlight, and light-reflective films of the invention were cut into the same shape and size as those of the reflective film that had been mounted in the backlight. In place of the previously mounted reflective film, cut reflective films of Examples and Comparative examples were set so that the surface of each film with the larger surface roughness SRa faced the light guide plate side, and the light guide plate and the three optical films were set in the same sequence and direction as before the disassembly.

With regard to relative luminance, evaluation was performed based on the following criteria, with a white reflective film "Lumirror" (registered trademark) #250E6SL (made by Toray Industries, Inc.) as a reference sample (100%), using a two-dimensional color luminance meter CA-2000W made by Konica Minolta Optics, Inc.

A: greater than or equal to 103%
B: greater than or equal to 102% and less than 103%
C: greater than or equal to 101% and less than 102%
D: less than 101%

On another hand, with regard to luminance irregularity, irregularities that were visually recognizable as luminance irregularities in a front view and an oblique view in an illuminated environment at 500 lx or in a dark environment were observed, and "bright spot irregularity" (where a potion with high luminance was observed as a dot) due to the close contact or damaging between the light-reflective sheet and the light guide plate and "flexure irregularity" (where light and dark areas were observed in a wave shape) due to flexure of the light-reflective sheet were each evaluated as follows.

[Bright Spot Irregularity]

A: Excellent (In the dark environment, bright spot irregularity was not visually recognized at either one of visual angles of a front view and an oblique view.)
B: Good (In the dark environment, bright spot irregularity was not visible in the front view but was visually recognized in the oblique view.)
C: Comparatively good (In the illuminated environment at 500 lx, bright spot irregularity was not visually recognized at either one of the visual angles of the front view and the oblique view but, in the dark environment, bright spot irregularity was visually recognized.)
D: Slightly inferior (In the illuminated environment at 500 lx, bright spot irregularity was not visible in the front view but was visually recognized in the oblique view.)
E: Inferior (In the illuminated environment at 500 lx, bright spot irregularity was visually recognized at both the visual angles of the front view and the oblique view.)
F: Very inferior (In the illuminated environment at 500 lx, very strong bright spot irregularity was visually recognized.)

[Flexure Irregularity]

A: Excellent (In the dark environment, flexure irregularity was not visually recognized at either one of the visual angles of the front view and the oblique view.)
B: Good (In the dark environment, flexure irregularity was not visible in the front view but was visually recognized in the oblique view.)
C: Comparatively good (In the illuminated environment at 500 lx, flexure irregularity was not visually recognized at either one of the angles of the front view and the oblique view but, in the dark environment, flexure irregularity was visually recognized.) D: Slightly inferior (In the illuminated environment at 500 lx, flexure irregularity was not visible in the front view but was visually recognized in the oblique view.)
E: Inferior (In the illuminated environment at 500 lx, flexure irregularity was visually recognized at both the visual angles of the front view and the oblique view.)
F: Very inferior (In the illuminated environment at 500 lx, very strong flexure irregularity was visually recognized.)

(8) Volume Average Particle Diameter of Particle in Applied Layer

The volume average particle diameter of the particle in an applied (hereinafter, sometimes termed coating) layer was determined by the following procedure.
A surface of a sample was dipped in an organic solvent, and an applied layer was peeled off and collected. After that, the applied layer was pressingly attached to and slid on a glass slide so that particles fell off from the applied layer.
The volume average particle diameter of the collected particles was measured by measuring the electric resistance of an electrolytic solution corresponding to the particle volume at the time of passage of the particles through small pores, by using a Coulter Multisizer III (made by Beckman Coulter, Inc.) as a particle size distribution measurement apparatus utilizing a fine pore electric resistance method. First, in a container, a very small amount of a sample was dispersed in a dilute surface-active agent aqueous solution. Subsequently, a dedicated electrolytic solution was added into the container. After that, measurement of the volume particle diameter continued together with automatic calculation until the number of particles that had passed reached 100 thousands. Thus, the volume average particle diameter was determined.

EXAMPLES

The invention will be described with reference to examples.

[Example 1]

Using polyethylene glycol having a number-average molecular weight of 4,000, and using polyethylene terephthalate whose post-polymerization color tone (JIS K7105:1981, measured by a stimulus value direct reading method) had an L value of 62.8, a b value of 0.5, and a haze of 0.2%, 85 mass parts of polyethylene terephthalate and 15 mass parts of polymethylpentene were adjusted and mixed, and then dried at 180°C for 3 hours, and subsequently supplied into an extruder B heated to 280°C (B layer) .
On another hand, 63 mass parts of polyethylene terephthalate, 83 mass parts of silicon dioxide particle polyethylene terephthalate master having a number average particle diameter of 3.5 $\mu$m (containing 6 mas% of silicon dioxide relative to the total amount of master chip), and 17 mass parts of a copolymer (PET/I) obtained by copolymerizing polyethylene terephthalate with 18 mol% of isophthalic acid were vacuum-dried at 180°C for 3 hours, and then was supplied into an extruder A heated to 280°C (A layer).
Likewise, 70 mass parts of polyethylene terephthalate and 20 mass parts of PET/I, 10 mass parts of barium sulfate were adjusted and mixed, dried at 180°C for 3 hours, and then supplied into an extruder C heated to 280°C (C layer).
These polymers were stacked in layer by passing them through a stacking apparatus so that an A layer/B layer/C layer stack was obtained, and the layer stack was formed into a sheet shape by a T die. Furthermore, an unstretched film obtained by cooling and solidifying the foregoing sheet by a cooling drum whose surface temperature was 25°C was led to a group of rolls heated to 85 to 98°C, longitudinally stretched to 3.6 times in the lengthwise direction, and then cooled on a group of rolls at 21°C. Subsequently, the longitudinally stretched film, while both ends thereof were held by clips, was led to a tenter, and laterally stretched to 3. 6 times in a direction perpendicular to the lengthwise direction in an atmosphere heated to 120°C. After that, the film was thermally fixed at 200°C within the tenter. After being uniformly cooled gradually, the film was cooled to room temperature. Thus, a biaxially stretched laminate film was obtained. The physical properties of the film as a light-reflective film were as in Table 1.

[Example 2]

85 mass parts of polyethylene terephthalate and 15 mass parts of polymethylpentene were adjusted and mixed, and dried at 180°C for 3 hours, and subsequently supplied into an extruder B heated to 280°C (B layer). On another hand, 63 mass parts of polyethylene terephthalate, 17 mass parts of silicon dioxide particle polyethylene terephthalate master having a number average particle diameter of 3. 5 $\mu$m (containing 6 mas% of silicon dioxide relative to the total amount of master chip), and 20 mass parts of PET/I were vacuum-dried at 180°C for 3 hours, and subsequently supplied into an extruder A heated to 280°C (A layer).
These polymers were stacked in layer by passing them through a stacking apparatus so that an A layer/B layer/A layer stack was obtained, and the layer stack was formed into a sheet shape by a T die. The formed sheet was biaxially stretched as in Example 1 to obtain a yet-to-be-subjected-to-application white sheet (A).
Separately from what has been described above, 98.5 mass parts of polyethylene terephthalate and 1.5 mass parts of silicon dioxide particle polyethylene terephthalate master having a number average particle diameter of 3. 5 $\mu$m (containing 6 mas% of silicon dioxide relative to the total amount of master chip) were vacuum-dried at 180°C for 3 hours, subsequently supplied into an extruder heated to 280°C, formed into a sheet shape by a T die, and likewise biaxially stretched, so that a transparent sheet (B) was obtained.
Next, an application liquid made by adding, while stirring, 67.5 mass parts of "HALS Hybrid" (registered trademark) UV-G720T (acrylic-based copolymer, a solution having a concentration of 40 mas%, made by NIPPON SHOKUBAI CO., LTD.), 29.5 mass parts of ethyl acetate, and 3 mass parts of silicon dioxide particle ("Sylosphere" (registered trademark) C1504 made by Fuji Silysia Chemical Ltd., having a volume average particle diameter of 4.0 $\mu$m) was prepared. This application liquid was applied to one surface of the aforementioned white sheet (A) by using a Wire bar #16, and an applied layer was provided in a dry condition at 120°C for one minute. Subsequently, a commercially sold substrate-less type sticky sheet having a thickness of 25 $\mu$m was stuck to the opposite surface of the white sheet (A) to the surface on which the applied layer was provided, and subsequently the sheet (B) was stuck, whereby a light-reflective film was obtained.

[Example 3]

An application liquid made by adding, while stirring, 60 mass parts of "HALS Hybrid" (registered trademark) UV-G720T (acrylic-based copolymer, a solution having a concentration of 40 mas%, made by NIPPON SHOKUBAI CO. , LTD.), 34 mass parts of ethyl acetate, and 6 mass parts of a silicone particle ("Tospearl" (registered trademark) 145 made by NISSHO SANGYO CO. , Ltd. , having a volume average particle diameter of 4.5 $\mu$m) was prepared. This application liquid was applied to one surface of the white sheet (A) of Example 2 by using a Wire bar #16, and an applied layer was provided in a dry condition at 120°C for one minute, whereby a light-reflective film was obtained.

[Example 4]

An application liquid made by adding, while stirring, 45 mass parts of "HALS Hybrid" (registered trademark) UV-G720T (acrylic-based copolymer, a solution having a concentration of 40 mas%, made by NIPPON SHOKUBAI CO. , LTD.), 43 mass parts of ethyl acetate, and 12 mass parts of a polystyrene resin particle ("TECHPOLYMER" (registered trademark) SBX-8 made by SEKISUI PLASTICS CO., Ltd., having a volume average particle diameter of 4.5 $\mu$m) was prepared. This application liquid was applied to one surface of the white sheet (A) of Example 2 by using a Wire bar #16, and an applied layer was provided in a dry condition at 120°C for one minute, whereby a light-reflective film was obtained.

[Example 5]

An application liquid made by adding, while stirring, 45 mass parts of "HALS Hybrid" (registered trademark) UV-G720T (acrylic-based copolymer, a solution having a concentration of 40 mas%, made by NIPPON SHOKUBAI CO. , LTD.), 43 mass parts of ethyl acetate, and 12 mass parts of an acrylic resin particle ("TECHPOLYMER" (registered trademark) MBX-5 made by SEKISUI PLASTICS CO., Ltd., having a volume average particle diameter of 4.5 μm) was prepared. This application liquid was applied to one surface of the white sheet (A) of Example 2 by using a Wire bar #16, and an applied layer was provided in a dry condition at 120°C for one minute, whereby a light-reflective film was obtained.

[Example 6]

An application liquid made by adding, while stirring, 45 mass parts of "HALS Hybrid" (registered trademark) UV-G720T (acrylic-based copolymer, a solution having a concentration of 40 mas%, made by NIPPON SHOKUBAI CO. , LTD.), 43 mass parts of ethyl acetate, and 12 mass parts of an acrylic resin particle ("TECHPOLYMER" (registered trademark) MBX-40 made by SEKISUI PLASTICS CO., Ltd., having a volume average particle diameter of 40 μm) was prepared. This application liquid was applied to one surface of the white sheet (A) of Example 2 by using a Wire bar #16, and an applied layer was provided in a dry condition at 120°C for one minute, whereby a light-reflective film was obtained.

[Example 7]

An application liquid made by adding, while stirring, 45 mass parts of "HALS Hybrid" (registered trademark) UV-G720T (acrylic-based copolymer, a solution having a concentration of 40 mas%, made by NIPPON SHOKUBAI CO. , LTD.), 43 mass parts of ethyl acetate, and 12 mass parts of a urethane resin particle ("Art Pearl" (registered trademark) C-400 Transparent made by Negami Chemical Industrial Co., Ltd., having a volume average particle diameter of 15 μm) was prepared. This application liquid was applied to one surface of the white sheet (A) of Example 2 by using a Wire bar #16, and an applied layer was provided in a dry condition at 120°C for one minute, whereby a light-reflective film was obtained.

[Example 8]

An application liquid made by adding, while stirring, 45 mass parts of "HALS Hybrid" (registered trademark) UV-G720T (acrylic-based copolymer, a solution having a concentration of 40 mas%, made by NIPPON SHOKUBAI CO. , LTD.), 43 mass parts of ethyl acetate, and 12 mass parts of a nylon resin particle (SP-10 made by Toray Industries, Inc., having a volume average particle diameter of 10 μm) was prepared. This application liquid was applied to one surface of the white sheet (A) of Example 2 by using a Wire bar #16, and an applied layer was provided in a dry condition at 120°C for one minute, whereby a light-reflective film was obtained.

[Example 9]

An application liquid made by adding, while stirring, 45 mass parts of "HALS Hybrid" (registered trademark) UV-G720T (acrylic-based copolymer, a solution having a concentration of 40 mas%, made by NIPPON SHOKUBAI CO. , LTD.), 43 mass parts of ethyl acetate, and 12 mass parts of a nylon resin particle (SP-20 made by Toray Industries, Inc., having a volume average particle diameter of 30 μm) was prepared. This application liquid was applied to one surface of the white sheet (A) of Example 2 by using a Wire bar #16, and an applied layer was provided in a dry condition at 120°C for one minute, whereby a light-reflective film was obtained.

[Example 10]

An application liquid made by adding, while stirring, 45 mass parts of "HALS Hybrid" (registered trademark) UV-G720T (acrylic-based copolymer, a solution having a concentration of 40 mas%, made by NIPPON SHOKUBAI CO. , LTD.), 43 mass parts of ethyl acetate, 9 mass parts of a nylon resin particle (SP-20 made by Toray Industries, Inc. , having a volume average particle diameter of 30 μm), and 3 mass parts of an acrylic resin particle ("TECHPOLYMER" (registered trademark) MBX-5 made by SEKISUI PLASTICS CO., Ltd., having a volume average particle diameter of 5 μm) was prepared. This application liquid was applied to one surface of the white sheet (A) of Example 2 by using a Wire bar #16, and an applied layer was provided in a dry condition at 120°C for one minute, whereby a light-reflective film was obtained.

[Examples 11 to 30]

Yet-to-be-subjected-to-application white sheets were manufactured with the raw material composition and thickness of each layer and the total film thickness changed as mentioned in Tables 2 and 3. Substantially the same application as in Example 8 was performed to obtain light-reflective films.

[Comparative examples 1 and 2]

Yet-to-be-subjected-to-application white sheets were obtained by substantially the same method as in Example 2, except that the raw material composition was changed as mentioned in Table 4. These sheets were handled as light-reflective sheets. Because the difference between the surface roughnesses of the two surfaces was 0.00 μm, bright spot irregularity and flexure irregularity were visually recognized, so that the sheets were not suitable to be used in a backlight.

[Comparative example 3]

An application liquid made by adding, while stirring 70 mass parts of "HALS Hybrid" (registered trademark) UV-G720T (acrylic-based copolymer, a solution having a concentration of 40 mas%, made by NIPPON SHOKUBAI CO. , LTD.), 28 mass parts of ethyl acetate, and 2 mass parts of a silicon dioxide particle ("SYLOPHOBIC" (registered trademark) 100 made by Fuji Silysia Chemical Ltd., having a volume average particle diameter of 3.0 μm) was prepared. This application liquid was applied to one surface of the white sheet (A) of Example 2 by using a Wire bar #16, and an applied layer was provided in a dry condition at 120°C for one minute, whereby a light-reflective film was obtained. Because the difference and the ratio between the surface roughnesses of the two surfaces were not sufficient, bright spot irregularity and flexure irregularity were visually recognized, so that the film was not suitable to be used in a backlight.

[Comparative example 4]

A yet-to-be-subjected-to-application white sheet was manufactured with the raw material composition and the thickness of each layer and the entire film thickness being changed as mentioned in Table 4. Substantially the same application as in Example 8 was performed to obtain a light-reflective film. However, the value of S/T × 1000 was insufficient, and flexure irregularity was conspicuously visually recognized, so that the film was not suitable to be used in a backlight.

[Table 1]

| Category | | Property | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Layer construction | Coating layer | Present or absent | – | Absent | Present | Present | Present | Present | Present | Present | Present | Present | Present |
| | | Kind of particle contained | – | – | Silicon dioxide | Silicone | Polystyrene | Acrylic | Acrylic | Urethane | Nylon | Nylon | Nylon/Acrylic |
| | | Volume average particle diameter of particle | μm | – | 3 | 4 | 8 | 5 | 40 | 15 | 10 | 30 | 30/10 |
| | | Layers other than coating | – | A/B/C | A/B/A/C/D | A/B/A | A/B/A | A/B/A | A/B/A | A/B/A | A/B/A | A/B/A | A/B/A |
| Surface roughness SRa | | One surface | μm | 0.59 | 0.54 | 0.6 | 0.71 | 0.62 | 1.2 | 0.85 | 1.3 | 1.8 | 1.9 |
| | | Other surface | μm | 0.08 | 0.03 | 0.1 | 0.1 | 0.1 | 0.1 | 0.1 | 0.1 | 0.1 | 0.1 |
| | | Difference in surface roughness | μm | 0.51 | 0.51 | 0.5 | 0.61 | 0.52 | 1.1 | 0.75 | 1.2 | 1.7 | 1.8 |
| | | Ratio in surface roughness | – | 7.4 | 18.0 | 6.0 | 7.1 | 6.2 | 12.0 | 8.5 | 13.0 | 18.0 | 19.0 |
| Physical property | | Entire film thickness (T) | μm | 150 | 280 | 193 | 201 | 198 | 233 | 208 | 203 | 223 | ·223 |
| | Thickness of each layer (if there are a plurality of layers, the sum of the thicknesses thereof) | Coating layer | μm | – | 5 | 5 | 13 | 10 | 45 | 20 | 15 | 35 | 35 |
| | | A layer | μm | 4 | 8 | 10 | 10 | 10 | 10 | 10 | 10 | 10 | 10 |
| | | B layer | μm | 142 | 142 | 178 | 178 | 178 | 178 | 178 | 178 | 178 | 178 |
| | | C layer | μm | 4 | 25 | – | – | – | – | – | – | – | – |
| | | D layer | μm | – | 100 | – | – | – | – | – | – | – | – |
| | | Apparent specific gravity | g/cm³ | 0.65 | 1.10 | 0.65 | 0.65 | 0.65 | 0.64 | 0.65 | 0.65 | 0.64 | 0.64 |
| | | Degree of bending rigidity (S) | mN·m | 0.21 | 5.2 | 1.0 | 1.0 | 1.0 | 1.0 | 1.1 | 1.0 | 1.2 | 1.2 |
| | | S/T × 1000 | $10^6$N | 1.4 | 18.6 | 5.2 | 5.0 | 5.1 | 4.3 | 5.3 | 4.9 | 5.4 | 5.4 |
| A layer raw material | | PET | Mass part | 78 | 79 | 79 | 79 | 79 | 79 | 79 | 79 | 79 | 79 |
| | | PET/I | Mass part | 17 | 20 | 20 | 20 | 20 | 20 | 20 | 20 | 20 | 20 |
| | | Silicon dioxide | Mass part | 5 | 1 | 1 | 1 | 1 | 1 | 1 | 1 | 1 | 1 |
| | | Titanium dioxide | Mass part | – | – | – | – | – | – | – | – | – | – |
| | | Barium sulfate | Mass part | – | – | – | – | – | – | – | – | – | – |
| B layer raw material | | PET | Mass part | 85 | 85 | 85 | 85 | 85 | 85 | 85 | 85 | 85 | 85 |
| | | PET/CHDM copolymer | Mass part | – | – | – | – | – | – | – | – | – | – |
| | | PBT/PTMG copolymer | Mass part | – | – | – | – | – | – | – | – | – | – |
| | | Titanium dioxide | Mass part | – | – | – | – | – | – | – | – | – | – |
| | | Barium sulfate | Mass part | – | – | – | – | – | – | – | – | – | – |
| | | Cyclic olefin | Mass part | – | – | – | – | – | – | – | – | – | – |
| | | Polymethylpentene | Mass part | 15 | 15 | 15 | 15 | 15 | 15 | 15 | 15 | 15 | 15 |
| C layer raw material | | PET | Mass part | 70 | – | – | – | – | – | – | – | – | – |
| | | PET/I | Mass part | 20 | – | – | – | – | – | – | – | – | – |
| | | Barium sulfate | Mass part | 10 | – | – | – | – | – | – | – | – | – |
| | | Acrylic | Mass part | – | 100 | – | – | – | – | – | – | – | – |
| D layer raw material | | PET | Mass part | – | 99.9 | – | – | – | – | – | – | – | – |
| | | Silicon dioxide | Mass part | – | 0.1 | – | – | – | – | – | – | – | – |
| Optical characteristic | | Relative reflectance (560nm) | % | 98.4 | 99.0 | 99.3 | 99.2 | 99.3 | 98.7 | 99.0 | 98.9 | 98.7 | 98.7 |
| | | Relative luminance | Evaluation | B | B | B | B | B | B | B | B | B | B |
| | Degree of luminance uniformity | Bright spot irregularity | Evaluation | C | C | C | B | B | A | B | A | A | A |
| | | Flexure irregularity | Evaluation | C | A | B | B | B | B | B | B | B | B |

[Table 2]

| Category | | | Unit | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Layer construction | Coating layer | Present or absent | - | Present | Present | Present | Present | Present | Present | Present | Present | Present | Present |
| | | Kind of particle contained | - | Nylon | Nylon | Nylon | Nylon | Nylon | Nylon | Nylon | Nylon | Nylon | Nylon |
| | | Volume average particle diameter of particle | μm | 10 | 10 | 10 | 10 | 10 | 10 | 10 | 10 | 10 | 10 |
| | Layers other than coating | | - | A/B/A | A/B/A | A/B/A | A/B/A | A/B/A | A/B/A | A/B/A | A/B/A | A/B/A | A/B/A |
| Surface roughness SRa | One surface | | μm | 1.30 | 1.30 | 1.30 | 1.30 | 1.30 | 1.30 | 1.30 | 1.30 | 1.30 | 1.30 |
| | Other surface | | μm | 0.10 | 0.10 | 0.10 | 0.10 | 0.10 | 0.10 | 0.10 | 0.10 | 0.20 | 0.05 |
| | Difference in surface roughness | | μm | 1.20 | 1.20 | 1.20 | 1.20 | 1.20 | 1.20 | 1.20 | 1.20 | 1.10 | 1.25 |
| | Ratio in surface roughness | | - | 13.0 | 13.0 | 13.0 | 13.0 | 13.0 | 13.0 | 13.0 | 13.0 | 6.5 | 26.0 |
| Physical property | Entire film thickness (T) | | μm | 203 | 203 | 203 | 203 | 221 | 221 | 221 | 221 | 203 | 203 |
| | Thickness of each layer (if there are a plurality of layers, the sum of the thicknesses thereof) | Coating layer | μm | 15 | 15 | 15 | 15 | 15 | 15 | 15 | 15 | 15 | 15 |
| | | A layer | μm | 20 | 20 | 20 | 20 | 56 | 56 | 56 | 56 | 20 | 20 |
| | | B layer | μm | 168 | 168 | 168 | 168 | 150 | 150 | 150 | 150 | 168 | 168 |
| | | C layer | μm | – | – | – | – | – | – | – | – | – | – |
| | | D layer | μm | – | – | – | – | – | – | – | – | – | – |
| | Apparent specific gravity | | g/cm³ | 0.64 | 1.09 | 0.75 | 0.72 | 0.81 | 0.80 | 0.84 | 0.83 | 0.74 | 0.74 |
| | Degree of bending rigidity (S) | | mN·m | 1.5 | 1.5 | 1.5 | 1.5 | 1.6 | 1.6 | 1.6 | 1.6 | 1.5 | 1.5 |
| | S/T × 1000 | | 10⁶N | 7.4 | 7.4 | 7.4 | 7.4 | 7.2 | 7.2 | 7.2 | 7.2 | 7.4 | 7.4 |
| A layer raw material | PET | | Mass part | 79 | 79 | 79 | 79 | 79 | 79 | 79 | 79 | 58 | 89.5 |
| | PET/I | | Mass part | 20 | 20 | 20 | 20 | 20 | 20 | 20 | 20 | 40 | 10 |
| | Silicon dioxide | | Mass part | 1 | 1 | 1 | 1 | 1 | 1 | 1 | 1 | 2 | 0.5 |
| | Titanium dioxide | | Mass part | – | – | – | – | – | – | – | – | – | – |
| | Barium sulfate | | Mass part | – | – | – | – | – | – | – | – | – | – |
| B layer raw material | PET | | Mass part | 72 | 59 | 62 | 49 | 72 | 59 | 62 | 49 | 72 | 72 |
| | PET/CHDM copolymer | | Mass part | 4 | 8 | 4 | 8 | 4 | 8 | 4 | 8 | 4 | 4 |
| | PBT/PTMG copolymer | | Mass part | 4 | 8 | 4 | 8 | 4 | 8 | 4 | 8 | 4 | 4 |
| | Titanium dioxide | | Mass part | – | – | – | – | – | – | – | – | – | – |
| | Barium sulfate | | Mass part | 15 | 15 | 25 | 25 | 15 | 15 | 25 | 25 | 15 | 15 |
| | Cyclic olefin | | Mass part | 5 | 10 | 5 | 10 | 5 | 10 | 5 | 10 | 5 | 5 |
| | Polymethylpentene | | Mass part | – | – | – | – | – | – | – | – | – | – |
| C layer raw material | PET | | Mass part | – | – | – | – | – | – | – | – | – | – |
| | PET/I | | Mass part | – | – | – | – | – | – | – | – | – | – |
| | Barium sulfate | | Mass part | – | – | – | – | – | – | – | – | – | – |
| | Acrylic | | Mass part | – | – | – | – | – | – | – | – | – | – |
| D layer raw material | PET | | Mass part | – | – | – | – | – | – | – | – | – | – |
| | Silicon dioxide | | Mass part | – | – | – | – | – | – | – | – | – | – |
| Optical characteristic | Relative reflectance (560nm) | | % | 101.5 | 102.0 | 101.7 | 102.2 | 100.5 | 100.8 | 100.6 | 100.9 | 101.4 | 101.5 |
| | Relative luminance | | Evaluation | B | B | A | A | B | B | B | B | A | A |
| | Degree of luminance uniformity | Bright spot irregularity | Evaluation | A | A | A | A | A | A | A | A | A | A |
| | | Flexure irregularity | Evaluation | A | A | A | A | A | A | A | A | A | A |

[Table 3]

| Category | | | Unit | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| Layer construction | Coating layer | Present or absent | - | Present | Present | Present | Present | Present | Present | Present | Present | Present | Present |
| | | Kind of particle contained | - | Nylon | Nylon | Nylon | Nylon | Nylon | Nylon | Nylon | Nylon | Nylon | Nylon |
| | | Volume average particle diameter of particle | μm | 10 | 10 | 10 | 10 | 10 | 10 | 10 | 10 | 10 | 10 |
| | Layers other than coating | | - | A/B/A | A/B/A | A/B/A | A/B/A | A/B/A | A/B/A | A/B/A | A/B/A | A/B/A | A/B/A |
| Surface roughness SRa | One surface | | μm | 1.30 | 1.30 | 1.30 | 1.30 | 1.30 | 1.30 | 1.30 | 1.30 | 1.30 | 1.30 |
| | Other surface | | μm | 0.10 | 0.10 | 0.09 | 0.12 | 0.12 | 0.10 | 0.09 | 0.12 | 0.09 | 0.09 |
| | Difference in surface roughness | | μm | 1.20 | 1.20 | 1.21 | 1.18 | 1.18 | 1.20 | 1.21 | 1.18 | 1.21 | 1.21 |
| | Ratio in surface roughness | | - | 13.0 | 13.0 | 14.4 | 10.8 | 10.8 | 13.0 | 14.4 | 10.8 | 14.4 | 14.4 |
| Physical property | Entire film thickness (T) | | μm | 240 | 365 | 203 | 203 | 203 | 203 | 203 | 203 | 115 | 115 |
| | Thickness of each layer (if there are a plurality of layers, the sum of the thicknesses thereof) | Coating layer | μm | 15 | 15 | 15 | 15 | 15 | 15 | 15 | 15 | 15 | 15 |
| | | A layer | μm | 20 | 20 | 20 | 20 | 20 | 20 | 20 | 20 | 12 | 12 |
| | | B layer | μm | 205 | 330 | 168 | 168 | 168 | 168 | 168 | 168 | 88 | 88 |
| | | C layer | μm | – | – | – | – | – | – | – | – | – | – |
| | | D layer | μm | – | – | – | – | – | – | – | – | – | – |
| | Apparent specific gravity | | g/cm³ | 0.74 | 0.74 | 0.75 | 0.75 | 0.75 | 0.75 | 0.76 | 0.76 | 0.77 | 0.76 |
| | Degree of bending rigidity (S) | | mN·m | 2.30 | 6.50 | 1.50 | 1.50 | 1.50 | 1.50 | 1.50 | 1.50 | 0.28 | 0.27 |
| | S/T × 1000 | | 10⁶N | 9.6 | 17.8 | 7.4 | 7.4 | 7.4 | 7.4 | 7.4 | 7.4 | 2.4 | 2.3 |
| A layer raw material | PET | | Mass part | 79 | 79 | 68 | 44 | 44 | 79 | 68 | 44 | 68 | 68 |
| | PET/I | | Mass part | 20 | 20 | 20 | 30 | 30 | 20 | 20 | 30 | 20 | 20 |
| | Silicon dioxide | | Mass part | 1 | 1 | – | 1 | 1 | 1 | – | 1 | – | – |
| | Titanium dioxide | | Mass part | – | – | – | 5 | 5 | – | – | 5 | – | – |
| | Barium sulfate | | Mass part | – | – | 12 | 20 | 20 | – | 12 | 20 | 12 | 12 |
| B layer raw material | PET | | Mass part | 72 | 72 | 54 | 54 | 66 | 54 | 54 | 54 | 54 | 54 |
| | PET/CHDM copolymer | | Mass part | 4 | 4 | 8 | 8 | | 8 | 8 | 8 | 8 | 8 |
| | PBT/PTMG copolymer | | Mass part | 4 | 4 | 8 | 8 | 4 | 8 | 8 | 8 | 8 | 8 |
| | Titanium dioxide | | Mass part | – | – | – | – | – | 20 | 20 | 20 | – | 20 |
| | Barium sulfate | | Mass part | 15 | 15 | 20 | 20 | 20 | – | – | – | 20 | – |
| | Cyclic olefin | | Mass part | 5 | 5 | 10 | 10 | – | 10 | 10 | 10 | 10 | 10 |
| | Polymethylpentene | | Mass part | – | – | – | – | 10 | – | – | – | – | – |
| C layer raw material | PET | | Mass part | – | – | – | – | – | – | – | – | – | – |
| | PET/I | | Mass part | – | – | – | – | – | – | – | – | – | – |
| | Barium sulfate | | Mass part | – | – | – | – | – | – | – | – | – | – |
| | Acrylic | | Mass part | – | – | – | – | – | – | – | – | – | – |
| D layer raw material | PET | | Mass part | – | – | – | – | – | – | – | – | – | – |
| | Silicon dioxide | | Mass part | – | – | – | – | – | – | – | – | – | – |
| Optical characteristic | Relative reflectance (560nm) | | % | 103.0 | 103.8 | 102.2 | 102.2 | 102.2 | 103.1 | 102.3 | 102.3 | 101.7 | 101.7 |
| | Relative luminance | | Evaluation | A | A | B | A | A | A | A | A | A | B |
| | Degree of luminance uniformity | Bright spot irregularity | Evaluation | A | A | A | A | A | A | A | A | A | A |
| | | Flexure irregularity | Evaluation | A | A | A | A | A | A | A | A | B | B |

[Table 4]

| | | | Unit | Comparative example 1 | Comparative example 2 | Comparative example 3 | Comparative example 4 |
|---|---|---|---|---|---|---|---|
| Layer construction | Coating layer | Present or absent | – | Absent | Absent | Present | Present |
| | | Kind of particle contained | – | – | – | Silicon dioxide | Nylon |
| | | Volume average particle diameter of particle | μm | – | – | 3 | 10 |
| | Layers other than coating | | – | A/B/A | A/B/A | A/B/A | A/B/A |
| Surface roughness SRa | One surface | | μm | 0.10 | 0.59 | 0.30 | 1.30 |
| | Other surface | | μm | 0.10 | 0.59 | 0.10 | 0.10 |
| | Difference in surface roughness | | μm | 0.00 | 0.00 | 0.20 | 1.20 |
| | Ratio in surface roughness | | – | 1.0 | 1.0 | 3.0 | 13.0 |
| Physical property | Entire film thickness (T) | | μm | 255 | 188 | 196 | 60 |
| | Thickness of each layer (if there are a plurality of layers, the sum of the thicknesses thereof) | Coating layer | μm | – | – | 8 | 10 |
| | | A layer | μm | 15 | 10 | 10 | 2 |
| | | B layer | μm | 240 | 178 | 178 | 48 |
| | | C layer | μm | – | – | – | – |
| | | D layer | μm | – | – | – | – |
| | Apparent specific gravity | | g/cm³ | 0.64 | 0.62 | 0.63 | 0.30 |
| | Degree of bending rigidity (S) | | mN·m | 2.50 | 0.90 | 1.00 | 0.02 |
| | S/T × 1000 | | 10⁶N | 9.8 | 4.9 | 5.1 | 0.3 |
| A layer raw material | PET | | Mass part | 79 | 79 | 79 | 79 |
| | PET/I | | Mass part | 20 | 20 | 20 | 20 |
| | Silicon dioxide | | Mass part | 1 | 1 | 1 | 1 |
| | Titanium dioxide | | Mass part | – | – | – | – |
| | Barium sulfate | | Mass part | – | – | – | – |
| B layer raw material | PET | | Mass part | 85 | 85 | 85 | 85 |
| | PET/CHDM copolymer | | Mass part | – | – | – | – |
| | PBT/PTMG copolymer | | Mass part | – | – | – | – |
| | Titanium dioxide | | Mass part | – | – | – | – |
| | Barium sulfate | | Mass part | – | – | – | – |
| | Cyclic olefin | | Mass part | – | – | – | – |
| | Polymethylpentene | | Mass part | 15 | 15 | 15 | 15 |
| C layer raw material | PET | | Mass part | – | – | – | – |
| | PET/I | | Mass part | – | – | – | – |
| | Barium sulfate | | Mass part | – | – | – | – |
| | Acrylic | | Mass part | – | – | – | – |
| D layer raw material | PET | | Mass part | – | – | – | – |
| | Silicon dioxide | | Mass part | – | – | – | – |
| Optical characteristic | Relative reflectance (560nm) | | % | 99.2 | 99.2 | 98.5 | 97.0 |
| | Relative luminance | | Evaluation | B | C | C | D |
| | Degree of luminance uniformity | Bright spot irregularity | Evaluation | D | E | E | C |
| | | Flexure irregularity | Evaluation | D | E | D | E |

Note that abbreviations in Table 1 to Table 4 represent the following contents. That is,

PET: polyethylene terephthalate
PET/I: material obtained by copolymerizing polyethylene terephthalate with 15 mol% of isophthalic acid
PET/CHDM: polyethylene-1,4-cyclohexylenedimethylene terephthalate (polyethylene terephthalate copolymer obtained by copolymerizing ethylene glycol with 33 mol% of 1,4-cyclohexane dimethanol)
PBT/PTMG: polyester ether elastomer butylene/poly(alkylene ether) phthalate (copolymer of butylene terephthalate with 30 mol% of alkylene glycol) (trade name: "Hytrel" (registered trademark) made by Du Pont-Toray Co., Ltd.)
silicon dioxide: silicon dioxide having a number average particle diameter of 3.5 μm
titanium dioxide: rutile-type titanium oxide having a number average particle diameter of 0.25 μm
barium sulfate: barium sulfate having a number average particle diameter of 1.4 μm

Industrial Applicability

The light-reflective film of the invention can be particularly suitably used as reflective plates for edge light type backlights, and can also be suitably used as reflective plates for various backlights and reflective plates for lighting apparatuses.

**Explanation of Numerals**

1:    light-reflective film
2:    light source (LED)
3:    light guide plate
4:    optical sheet
5:    casing


**Claims**

1.  A light-reflective film that satisfies all of (i) to (iv) below:

    (i) the light-reflective film is a film in which at least two layers are stacked;
    (ii) a difference in surface roughness SRa between one surface and another surface is greater than or equal to 0.5 $\mu$m;
    (iii) a value obtained by dividing the surface roughness (SRa) of the one surface by the surface roughness (SRa) of the another surface is greater than or equal to 6.0; and
    (iv) a thickness T ($\mu$m) of the entire film and a degree of bending stiffness S (mN·m) satisfy an expression of

    $$1 \leq S/T \times 1000 \leq 25.$$

2.  The light-reflective film according to claim 1, wherein at least one surface is provided with a coating that contains an organic particle.

3.  The light-reflective film according to claim 2, wherein the organic particle is made of at least one selected from the group consisting of nylon, acrylic, and urethane.

4.  The light-reflective film according to claim 2 or 3, wherein a volume average particle diameter of the organic particle is greater than or equal to 5 $\mu$m and less than or equal to 50 $\mu$m.

5.  The light-reflective film according to any one of claims 1 to 4 that satisfies all of (1) to (4) below:

    (1) the light-reflective film has a layer that substantially does not contain a cavity and a layer that contains a cavity;
    (2) the layer that contains the cavity contains an inorganic particle and a resin incompatible with a matrix resin;
    (3) content of the resin incompatible with matrix resin is greater than or equal to 5 mas% and less than 12 mas% where a mass of the entire layer that contains the cavity is defined as 100 mas%; and
    (4) content of the inorganic particle is greater than or equal to 15 mas% and less than 30 mas% where the mass of the entire layer that contains the cavity is defined as 100 mas%.

6.  An edge light type backlight in which the light-reflective film according to any one of claims 1 to 5 is mounted.

[Fig. 1]

## INTERNATIONAL SEARCH REPORT

| International application No. |
|---|
| PCT/JP2014/064752 |

A.  CLASSIFICATION OF SUBJECT MATTER
*G02B5/08*(2006.01)i, *B32B7/02*(2006.01)i, *F21S2/00*(2006.01)i, *F21V7/00*
(2006.01)i, *F21V7/04*(2006.01)i, *F21Y101/02*(2006.01)n

According to International Patent Classification (IPC) or to both national classification and IPC

B.  FIELDS SEARCHED

Minimum documentation searched (classification system followed by classification symbols)
G02B5/08, B32B7/02, F21S2/00, F21V7/00, F21V7/04, F21Y101/02

Documentation searched other than minimum documentation to the extent that such documents are included in the fields searched
Jitsuyo Shinan Koho            1922–1996   Jitsuyo Shinan Toroku Koho    1996–2014
Kokai Jitsuyo Shinan Koho    1971–2014   Toroku Jitsuyo Shinan Koho    1994–2014

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2012-135952 A  (Toray Industries, Inc.), 19 July 2012 (19.07.2012), paragraphs [0027], [0032] to [0033]; tables 1 to 3 (Family: none) | 1-6 |
| Y | JP 2000-82313 A  (Enplas Corp.), 21 March 2000 (21.03.2000), paragraphs [0001], [0036] to [0037], [0039], [0045], [0050]; fig. 1 (Family: none) | 1-6 |

☒  Further documents are listed in the continuation of Box C.        ☐  See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered   to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| 03 July, 2014 (03.07.14) | 15 July, 2014 (15.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/064752

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-92018 A  (Keiwa Inc.),<br>28 March 2003 (28.03.2003),<br>paragraphs [0009], [0026], [0030] to [0031];<br>fig. 3<br>& US 2003/0053008 A1    & KR 10-2003-0025192 A<br>& CN 1409161 A | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003092018 A
- JP 2008512719 W
- JP 2010230804 A